# EUROPEAN PATENT APPLICATION

(11) **EP 2 073 131 A1**
(43) Date of publication of application: **24.06.2009**
(21) Application number: 07305003.1
(22) Date of filing: 21.12.2007
(51) Int. Cl.: G06F 17/30

(54) **Method and apparatus for processing a search query for text content items**

(71) Applicant: Motorola, Inc., Schaumburg, IL 60196 (US)
(72) Inventor: Bratu, Ben, Paris 75013 (FR); Waddington, Simon, Basingstoke RG24 8XW (GB); Kompatsiaris, Ioannis Informatics and Telematics Institute(ITI), Thermi-hessaloniki 57001 (GR); Menemenis, Fotis Informatics and Telematics Institute(ITI), Thermi-hessaloniki 57001 (GR); Nidelkou, Evangelia Informatics and Telematics Institute(ITI), Thermi-hessaloniki 57001 (GR); Papadopoulos, Symeon, Thermi, Thessaloniki 57001 (GR)
(74) Representative: Jepsen, René Pihl

(57) **Abstract**

A search query apparatus comprises a first query processor (103) which generates a first set of search queries. A first search processor (105) then submits this to a search engine for text content items and a result processor (107) receiving text content item search results for the set of search queries. A cluster processor (109) clusters a plurality of the search results in response to characterising data for the search results. The clustering generates a plurality of clusters of search result text content items. The cluster processor determines a first cluster characteristic for at least one cluster and validation processor (111) generates a search query accuracy measure for the search queries in response to the first cluster characteristic. Based on the clustering, and optionally the accuracy measure, a second query processor (115) can then expand the first set of search queries, e.g. to include other terms of one of the clusters of search results.

## Description

### Field of the invention

The invention relates to a method and apparatus for processing a search query for text content items and in particular, but not exclusively, to search query processing for search queries for an Internet based search application.

### Background of the Invention

As the amount of information and date available to the individual person has increased, the ability to find specific information of interest amongst the abundance of available information is becoming increasingly difficult. For example, with the increasing volume of online text documents available, it is increasingly difficult to find the most appropriate text documents for the user's current needs.

Accordingly, online search applications have become of ever increasing importance and indeed web search applications have become one of the most commonly used applications for any computer user. In such search systems, the user typically enters query terms and the search engine retrieves the most relevant information for that query.

However, a disadvantage for many search applications is that they may not return search results that are as accurate or relevant as desired for the individual user. Accordingly, the user may submit a number of different search queries and may manually adapt and modify the used search query in order to try to improve the obtained search results. However, such an approach tends to be very cumbersome and impractical for the individual user and may be particularly frustrating and difficult to manage for a mobile user due to the typical device limitations (e.g. keyboard, display) for such environments.

Accordingly, it has been proposed to modify search engines to automatically propose new queries starting from the initial user entered query. The modified queries are generated on the basis of a statistical analysis of previous queries submitted to the search engine. Typically, a very large database is built up based on millions of user queries submitted to the search engine. However, such an approach requires a centralized implementation at the search engine and requires large memory and computational resources in order to generate, maintain, operate and store the database. Furthermore, the statistical approach does not always provide optimum results and may in many scenarios provide suggested queries that do not optimally reflect the user's preference or intention. For example, the approach tends to propose only the most frequent queries submitted by all users and tend to not always propose the most relevant queries for the given context

Hence, an improved system for processing search queries would be advantageous and in particular a system allowing increased flexibility, reduced complexity, reduced memory requirements, reduced resource requirements, simplified operation, facilitated operation, improved accuracy, increased correspondence with individual user preferences, improved and/or facilitated generation of search queries and/or improved performance would be advantageous.

### Summary of the Invention

Accordingly, the Invention seeks to preferably mitigate, alleviate or eliminate one or more of the above mentioned disadvantages singly or in any combination.

According to a first aspect of the invention there is provided a method of processing a search query for text content items, the apparatus comprising: generating a first set of search queries; submitting the first set of search queries to a search engine for text content items; receiving text content item search results for the first set of search queries from the search engine; clustering a plurality of the text content item search results in response to characterising data for the text content item search results, the clustering generating a plurality of clusters of text content items search results; determining a first cluster characteristic for at least a first cluster of the plurality of clusters; and generating a search query accuracy measure for the first set of search queries in response to the first cluster characteristic.

The invention may allow an improved search query system. In particular, improved performance and/or facilitated implementation and/or facilitated operation may be achieved.

An improved search query accuracy measure may be generated in many embodiments. The search query accuracy measure may in some embodiments be used to provide a reliability indication for the search results. In other embodiments, the reliability indication may be used to generate a second set of search queries thereby providing an improved search query and thus improved search results.

The first set of search queries may comprise one or more search queries. Each search query may comprise a set of terms, such as keywords. The search application may be an Internet search engine. The accuracy measure may e.g. correspond to an overall accuracy measure for the set of search queries, to an accuracy measure of a single or group of search queries of the set of search queries or may e.g. be a composite accuracy measure comprising a plurality of independent accuracy measures for each search query of the set of search queries.

The text content items may be any content item comprising a text element and may specifically be online text content items such as online documents, web pages, blogs, articles, news etc.

The clustering may be in response to a similarity measure and/or criterion. Each cluster of the plurality of clusters may comprise text content items of the text content item search results that meet a given similarity criterion.

According to another aspect of the invention there is provided an apparatus for processing a search query for text content items, the apparatus comprising: a unit for generating a first set of search queries; a unit for submitting the first set of search queries to a search engine for text content items; a unit for receiving text content item search results for the first set of search queries from the search engine; a unit for clustering a plurality of the text content item search results in response to characterising data for the text content item search results, the clustering generating a plurality of clusters of text content items search results; and a unit for determining a first cluster characteristic for at least a first cluster of the plurality of clusters; and a unit for generating a search query accuracy measure for the first set of search queries in response to the first cluster characteristic.

These and other aspects, features and advantages of the invention will be apparent from and elucidated with reference to the embodiment(s) described hereinafter.

### Brief Description of the Drawings

Embodiments of the invention will be described, by way of example only, with reference to the drawings, in which
FIG. 1 is an illustration of an example of an apparatus for processing a search query in accordance with some embodiments of the invention; and
FIG. 2 is an illustration of an example of a flowchart for a method of processing a search query in accordance with some embodiments of the invention.

### Detailed Description of Some Embodiments of the Invention

The following description focuses on embodiments of the invention applicable to an Internet based search application for text documents. However, it will be appreciated that the invention is not limited to this application but may be applied to many other search applications.

The embodiments described in the following provide a system for processing (including generating) search queries for text content items. The search queries may be particularly suitable for web search engines and may specifically be text search queries comprising one or more search terms or words. The text content items may be any content item that comprises a text element including for example video or audio clips comprising associated text based metadata describing the video or audio clip (such as a title). In the described example, the text content items are online text documents and specifically they are Web pages of the World Wide Web.

The system uses context information for a query to automatically construct suitable text queries which can then be suggested to a user. The context information can specifically be contents of a text content item currently consumed by a user or e.g. be search results obtained from a previously submitted query.

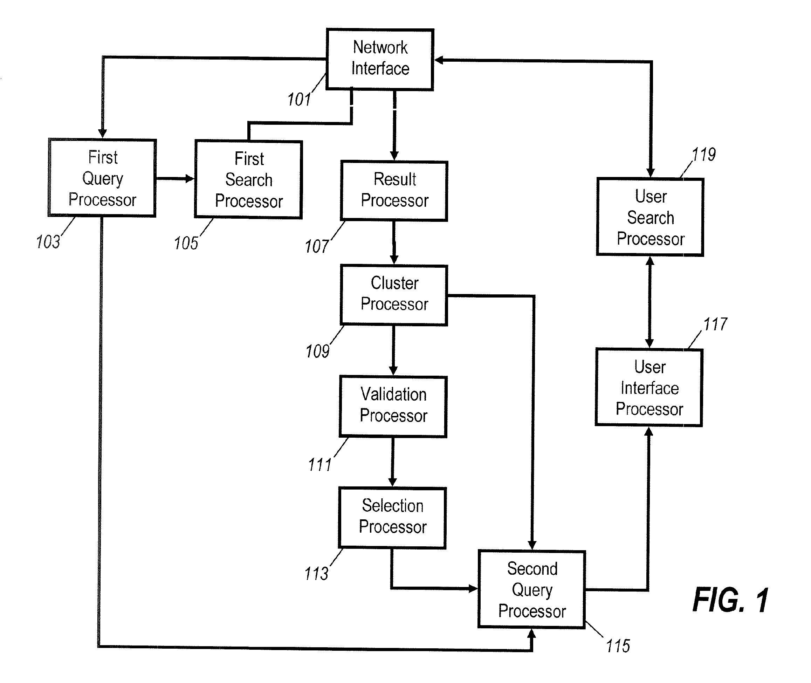

An example of a search apparatus for processing a search query in accordance with some embodiments of the invention is illustrated in FIG. 1.

The search apparatus is in the specific example part of a mobile device such as a user equipment for a cellular communication system.

The search apparatus can perform a number of different functions. Firstly, the search apparatus may submit a set of search queries to a search engine, which specifically may be an online search application. Based on the received results, the apparatus may apply a clustering process from which an accuracy measure for the search queries may be determined.

In the example, the initial set of search queries is automatically generated on the basis of a content item that is currently consumed by a user. Specifically, a user may read e.g. a Short Message Service (SMS) text message and based on this, a set of a plurality of search queries may be generated. It will be appreciated that in other embodiments, other ways of generating the initial set of search queries may be used including e.g. the user manually inputting one or more search terms.

Based on the determined accuracy measure, the search apparatus may select a subset of search queries of the set of search queries. These selected queries may then e.g. be provided to the user for selection, be submitted to a search engine, be used to filter the received search results, or be processed further. It will be appreciated that in some embodiments, the set of search queries may comprise only a single search query.

The search apparatus may optionally generate new enhanced search queries based on the original set of search queries and the clustering process (and possibly based on the accuracy measure). The enhanced set of search queries may then e.g. be provided to the user for selection, be submitted to a search engine, be used to filter the received search results, or be processed further. The process of submitting a set of search queries, processing the results and generating a new set of search queries may be iterated a number of times.

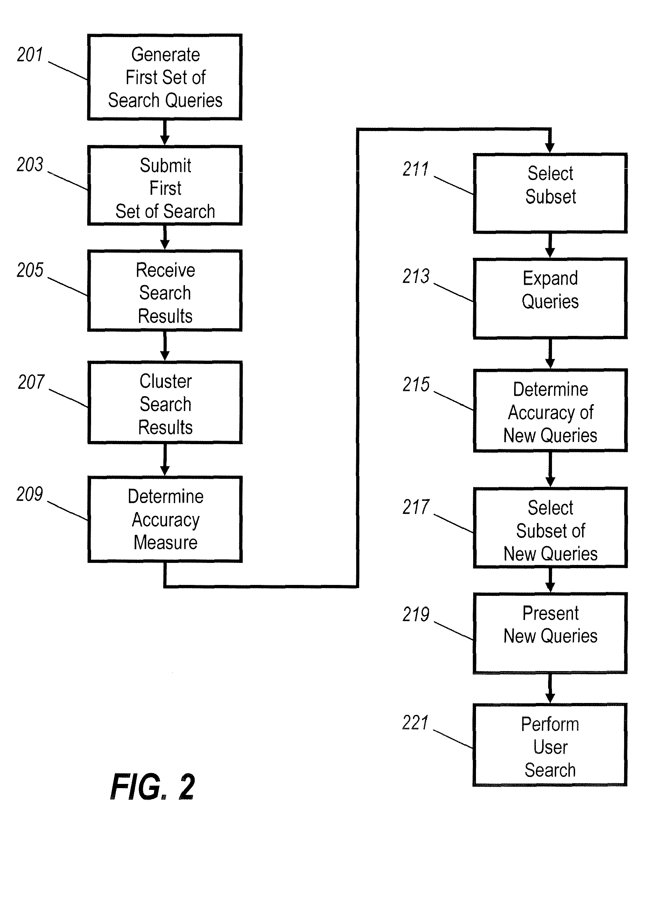

An exemplary operation of the search apparatus of FIG. 1 will be described with reference to FIG. 2 which illustrates a method of processing search queries in accordance with some embodiments of the invention.

The search apparatus comprises a network interface 101 which is operable to couple the search apparatus to a suitable communication network in order to access a remote search engine. In the example, the search apparatus is a user equipment of a cellular communication system, such as a Global System for Mobile communication (GSM) or a Universal Mobile Telecommunication System (UMTS), and accordingly the network interface 101 comprises the required or desired functionality for communicating over the air interface of the cellular communication system. Furthermore, the cellular communication system provides Internet access to the user equipment through a suitable interworking function.

The network interface 101 is coupled to a first query processor 103 which is arranged to execute step 201 of the method of FIG. 2 wherein a first set of search queries is generated.

In the example, the first query processor 103 automatically generates a first set of search queries in response to a text item presented to the user. The text document is specifically a very short message, such as an SMS, email or an instant message conversation. Such message types are typically very short (typically less than one hundred words) and a substantial advantage of the current approach is that the initial query generation and following accuracy determination allows efficient search queries to be generated from such short messages.

Specifically, the first set of initial queries is derived by Natural Language Processing (NLP) based processing of the consumed text document to generate a set of ranked keywords (a text vector). Thus, NLP algorithms may be applied to extract key terms of the consumed text document such as e.g. nouns and Named Entities (known predetermined names of specific entities) with their corresponding type - (e.g. Person, Location, Organization).

Thus, in the example, the first query processor 103 is arranged to perform a text analysis to extract a set of terms from the consumed text document. The extracted terms provide data that characterizes the content of the text document.

Based on the extracted keywords, the initial queries may then be generated. As a simple example, the first set of search queries may comprise a plurality of two term search queries corresponding to all possible sets of two keywords from the extracted set of terms.

It will be appreciated that more complex approaches may be used to generate the queries from the extracted terms. For example, the query creation may be based on exploring all possible combinations of terms according to a set of rules and then selecting the top-ranking queries. In order to rank the queries, the first query processor 103 can take into account the Named Entity type of the terms, their frequency of appearance in the text as well as whether they appear in a higher-ranked query (so that term diversity can be achieved).

It will be appreciated that different approaches for analyzing the whole or part of the consumed text document, for automatically extracting key terms and for constructing the set of queries using the extracted terms will be known to the person skilled in the art.

Indeed, for a large Web page or a large text document these approaches may in themselves provide good results in terms of relatively accurate search queries (providing a good indication of the desires and interest of the user). However, for short text documents, it is often difficult to determine the most relevant terms or e.g. to identify the appropriate topic of the text document. Unfortunately, such a property of consumed text content is commonly seen in mobile phone environments where for example SMS messages are limited to 160 characters. Starting from such a short text, the NLP approaches will tend to produce a relatively large number of extracted terms as there tends to be insufficient information to determine which terms are of particular relevance for the content of the text document. For example, conventional methods based on statistical analysis of occurrences of terms in the text (e.g. term frequency approaches) or based on textual formatting information are ineffective. Accordingly, known techniques tend to be inefficient and result in suboptimal performance and will typically result in generation of search queries many of which are irrelevant for the user.

In the example, the search apparatus is arranged to execute a specific technique which allows a reliable accuracy measure to be determined for the generated search queries thereby allowing a determination of relevant and appropriate search queries which are automatically generated by key term text extraction.

Step 201 is followed by step 203 wherein a first search processor 105 coupled to the first query processor 103 submits the first set of search queries to a search engine. Specifically, the first search processor 105 is coupled to the network interface 101 to which it feeds the first set of search queries. The network interface 101 then proceeds to submit the queries to an Internet based search engine by addressing a communication to this search engine and transmitting it via the cellular communication system.

Step 203 is followed by step 205 wherein the resulting text content item search results are received back from the search engine. The search results are received by the network interface 101 and fed to a result processor 107. In the example, the result processor 107 thus receives the search results for all the search queries that were submitted to the search engine.

In some embodiments, the result processor 107 may process the search result by applying a filtering approach. For example, only the top n (e.g. n=10 or 20) of search results for each search query can be maintained with the remaining results being discarded. As another example, in order to use only particularly relevant search engine results, extracted text of each result may be compared to the input content (the consumed text document) and only the search results that meet a similarity criterion may be maintained with all other search results being rejected.

Thus, in the example, the result processor 107 is operable to filter the text content item search results in response to characterising data for the text document consumed by the user. The filtering comprises discarding all text content item search results not meeting a similarity criterion relative to the text content item consumed by the user.

The search apparatus is arranged to generate a search query accuracy measure for the first set of search queries in response to characteristics of a clustering process. Accordingly, the result processor 107 is coupled to a cluster processor 109 which performs step 207 of the method of FIG 2. wherein a plurality of the text content item search results are clustered in response to characterising data for the text content item search results. As a consequence of the clustering, a plurality of clusters of text content items (the search results) are generated.

Specifically, the search results are semantically analyzed to generate characterizing data for each search result. E.g. NLP processing similar or identical to that applied to the original consumed text document may be applied to each text result to generate a set of terms for each search result. Specifically, a term vector representation can be generated for each specified web page with the generated text vector containing the relevant terms extracted from the content.

Alternatively or additionally, characterising data may be generated for each search result using a topic classification approach. Thus, a topic classification process may be used to determine one or more topics that can be associated with the content of the individual search result. The generated text term vector may then consist in or comprise terms which are associated with the identified topic e.g. regardless of whether these terms are actually comprised in the search result itself.

As will be appreciated by the skilled person, a suitable topic classification algorithm can be based on calculation of the distance between a search result term vector and a set of prototype topic vectors (created a priori). The distance metric used for this purpose can e.g. be either Euclidean (by use of term frequency) or Jaccard distance.

The clustering is specifically performed such that search results that have similar characterising data are clustered together. For example, all search results that meet a specific similarity criterion may be clustered together in the same cluster.

In more complex embodiments, the cluster processor 109 may for example group the search results by using a clustering algorithm such as a k-means or isodata clustering algorithm.

A k-means clustering algorithm initially defines k clusters with given initial parameters (e.g. term vectors). The term vectors for the search results are then matched to the (term vectors of the) k clusters. The parameters for each cluster are then recalculated based on the search results that have been assigned to each cluster. The algorithm then proceeds to reallocate the search results to the k clusters in response to the updated parameters for the clusters. If these operations are iterated a sufficient number of times, the clustering converges resulting in k groups of search results having similar properties.

Following the clustering, a cluster characteristic is determined for one or more of the clusters.

The cluster processor 109 is coupled to a validation processor 111 which is operable to execute step 209 which follows step 207. In step 209, the validation processor 111 determines a search query accuracy measure for the first set of search queries in response to the generated cluster characteristic.

The search query accuracy measure may be any indication of a correspondence between the text content item search results returned in response to the first set of queries and the assumed interest of the user. Specifically, the search query accuracy measure may be any characteristic or property which may provide an indication of a possible user interest in the search results and/or an indication of a probability that the search queries will provide search results of interest to the user.

Specifically, the validation processor 111 can generate an indication of the validity of the automatically constructed queries of the first set of queries and this validity criterion can be used to select a subset of search queries to use.

The validation process performed by the validation processor 111 specifically measures the relevance of each query based on an accuracy value of the information returned by the query, i.e. based on the search results. This accuracy value is computed based on the characterising data of the search results and the clustering process. Thus, the accuracy measure depends on the cluster characteristic determined in step 207 by the cluster processor 107.

Accordingly, in the system, the validity of the queries is not determined by determining a degree of similarity between the initial context and the obtained results or by a satisfaction measure between a user profile and the obtained results. Such approaches may possibly provide suitable results in many scenarios but are not suitable for scenarios where the initial consumed text document is a very short message or a wherein no suitable user profile is available.

Rather, the current approach provides an improved accuracy measure by evaluating characteristics associated with a clustering of the returned search results thereby providing enhanced data on which to perform such an analysis.

In particular, the validation processor 111 can determine an accuracy measure for each search query of the first set of search queries in response to a cluster characteristic determined by clustering the search results for the query.

It will be appreciated that alternatively or additionally an accuracy value may be determined for the set of search queries as a whole e.g. in response to a cluster characteristic determined from a clustering of search results for a plurality of search queries and possibly all search queries of the first set of search queries. Similarly, it will be appreciated that the cluster characteristic generated by the cluster processor 109 may be related to a clustering of all search results for all search queries of the set, or may relate to a subset and specifically to clustering of results for individual search queries.

The cluster characteristic and/or the search query accuracy measure may be a composite characteristic and/or measure comprising a plurality of individual cluster characteristics and/or accuracy measures for clustering of results from individual or groups of search queries.

It will be appreciated that different cluster characteristics and/or algorithms for associating the cluster characteristic with an accuracy measure may be used.

For example, in some embodiments, the cluster characteristic may be a cluster size characteristic indicative of a number of text content item search results in a cluster. For example, the cluster size of the cluster which comprises most search results may be determined and used to generate an accuracy message.

E.g., if most of the search results are clustered into a single cluster then the proposed query can be considered valid because the results are consistent for the given information value. Thus, a high accuracy measure will be generated. For example, a binary accuracy measure simply indicating whether the search query is considered valid or not can be determined by determining the proportion of search results that are clustered in one cluster. Hence, if the number of search results in the largest cluster divided by the total number of search results is above a given threshold, an accuracy measure indicating that the corresponding search query is valid may be generated and otherwise an accuracy measure indicating that the corresponding search query is not valid is generated.

In other embodiments, a non-binary accuracy measure may be generated wherein the accuracy measure increases for an increasing proportion of search results in one cluster. Indeed, in some embodiments the proportion of search results in the largest cluster may directly be used as an accuracy measure.

In some embodiments, only a specific group of search results are considered when determining the proportion, such as only search results ranked higher than a given threshold. Thus, the group of text content item search results used to determine the accuracy measure may be selected in response to a ranking of the search results from the search engine.

This may allow more information generated by the search engine to be taken into account when assessing the individual search queries. Specifically, search engines typically have powerful information retrieval and ranking algorithms in order to indicate results that are considered most relevant for a given query. This information can be considered by introducing a validity measure that requires that more than a given threshold of the highest ranked search results are in the same cluster in order for the query to be considered valid.

In some embodiments, the validation processor 111 may be arranged to determine an associated topic for each cluster and the cluster characteristic used to determine the accuracy measure can comprise a topic distribution characteristic for the plurality of clusters.

Thus, a conventional topic categorisation may be applied to each cluster (such as e.g. a term matching between predefined topics and a centroid term vector for each cluster). As the search results may often be relatively long documents, such a topic categorisation will typically be relatively accurate.

A centroid term vector for a given set of documents is a single vector that represents an average or weighted average of the vectors representing the individual documents in the set. The individual document vectors may be determined using the term-frequency inverse-document-frequency TFIDF weights of relevant terms in the document. The clustering algorithm may produce a centroid vector for each cluster, or the centroid vector may be determined by a separate computation.

The distribution of clusters in different topic categories may then be used to determine the accuracy measure. For example, a binary validity measure may be generated depending on whether the number of different topics exceeds a given threshold. E.g. if most of the clusters are classified into the same topic then this consistency indicates that the search query is valid. As a non-binary example, the accuracy measure may be provided as the reciprocal of the number of different topics generated for the set of clusters.

It will be appreciated that depending on the specific requirements and preferences of each application and embodiment, the determined search query accuracy measure(s) may be used in different ways. For example, the search apparatus may present all the generated search queries and associated accuracy measures to the user in order to allow him to select a specific search query to use for a manual search. The presentation of the different search queries may for example be dependent on the generated search accuracy measures.

In the example of FIG. 1, a subset of search queries from the initial set of search queries is generated in response to the search query accuracy measures. Therefore, the validation processor 111 is coupled to a selection processor 113 which is arranged to execute step 211 wherein a subset of queries is selected. For example, the selection processor 113 can discard all search queries for which the accuracy measure is indicative of the search query not being valid. As another example, only a predetermined number of search queries are included in the subset. These queries may be selected as the ones having the highest accuracy value. In the search apparatus of FIG. 1, only the search queries that are included in the subset generated by the selection processor 113 are processed further.

It will be appreciated that in some embodiments, no further processing of the search queries are performed. For example, the subset of search queries may be submitted to the user for manual selection and searching.

However, in the described embodiments, the search queries are improved, enhanced and/or expanded in response to the received search results and the clustering of these.

Accordingly, the selection processor 113 is coupled to a second query processor 115 which is also coupled to the first query processor 103 and the cluster processor 109. The second query processor 115 is operable to execute step 213 wherein the (remaining) search queries are expanded.

Specifically, the second query processor 115 first determines a cluster characteristic for at least one cluster of the plurality of clusters generated by the cluster processor 109. The second query processor 115 then proceeds to determine at least one search query for an enhanced set of search queries in response to the cluster characteristic.

The cluster characteristic may be the same or have an overlap with the cluster characteristic used to determine the accuracy measure but may also be an entirely different cluster characteristic. Likewise, cluster(s) used for the query expansion may be the same or have an overlap with the cluster(s) used to determine the accuracy measure but may also be (a) different cluster(s). In the example, the same clustering is used.

In the example, each search query in the subset of search queries determined in step 211 is individually expanded in step 213. Thus, for each initial search query and associated clustering of search results resulting from that search query, a new search query is generated based on the clustering. This new search query may specifically be an expanded version of the original search query.

The second query processor 115 can generate individual characterising data for each cluster and the characterising data can be generated by text analysis of the text content of the search results that belong to the cluster.

Specifically, the same semantic analysis as that used for the clustering process can be applied. Thus, during the clustering process a number of relevant terms are extracted for each search result. These terms may be used to e.g. generate a term vector for the individual cluster. It will be appreciated that in some embodiments the term vector used for each individual cluster may be the centroid term vector.

However, in other embodiments, a separate term vector may be generated by selecting relevant terms on the basis of all terms of the individual term vectors of the individual search results in the cluster. For example, a term frequency analysis may be performed across all search results in the cluster. The refinement of the selected set of terms can e.g. be followed by a semantic and sense disambiguation step.

The new set of terms will be used to expand the initial proposed query.

Specifically, for a given search query of the subset determined in step 211, the second query processor 115 first selects one cluster of the generated clusters for the search query. In some embodiments, the second query processor 115 may determine a similarity measure for the search query and each cluster of the plurality of clusters generated for the search query. The most appropriate cluster for the search query is then selected in response to the generated similarity measures.

The similarity measure may be implicitly determined as part of the clustering process. For example, the number of search results in a cluster may be used as a similarity measure for the cluster. Thus, the second query processor 115 can select the cluster that contains the most search results as it is likely that this cluster represents search results most closely associated with the search query. As another example, a distance metric between a term vector for the original content item and the determined term vector for the cluster may be used (e.g. a Euclidean or Jaccard distance).

After the selection of the most appropriate cluster, the second query processor 115 proceeds to expand the original search query by adding terms from the generated term vector for the cluster to the original search query. In some embodiments, all terms of the cluster term vector may be added but in most embodiments only the highest ranked terms (e.g. in terms of term frequency in the cluster) are added to the search query. It will also be appreciated that in some embodiments, one or more terms of the original search query may be removed e.g. to be replaced by terms from the cluster term vector.

Alternatively or additionally, the enhancement of the search query may be based on a topic classification approach. Specifically, based on the cluster term vector of the most appropriate cluster, a topic classification may be performed to determine a topic associated therewith.

As the cluster term vector is generated from a number of search result text items which often may be relatively large, the vector is likely to provide sufficient information for an accurate topic classification.

For each of a predefined number of topics, the second query processor 115 may have stored a topic term vector which comprises terms that are particularly relevant for this topic. The second query processor 115 may accordingly retrieve such terms and add one or more of these terms to the search query. Thus, this predefined list of terms can be used to expand the initial query.

As an example, the second query processor 115 may determine that the topic of a selected cluster is "music". In this example, a predefined query term of "ringtone" may be appended to the search query if this has previously been determined to be a popular search term for music-related content.

Thus, the second query processor 115 may generate a second enhanced set of search queries that may provide improved search results. Furthermore, such an enhancement can be achieved without requiring additional information or complex processing. For example, no user profile or large database of queries that are statistically validated or generated by a collaborative filtering algorithm is required. Furthermore, the approach is suitable for generation of improved searches from original text messages that are very short as the search result clustering based approach in effect provides an expansion of data indicative of the user interest.

It will be appreciated that one or more of the described steps may be iterated. For example, the enhanced search queries may be submitted to the search engine and the corresponding search results may be used in the same way as the original search results to determine accuracy measures for the enhanced search enquires and/or for further enhancement of these.

However, in the specific example, the second set of queries is presented to a user who can then select one or more search queries for a manual search. Accordingly, the second query processor 115 is coupled to a user interface processor 117.

In the example, the user interface processor 117 does not directly present all search queries of the second set. Rather, step 213 is followed by step 215 wherein query accuracy measures are generated for the enhanced set of search queries. The accuracy measures may e.g. be determined by comparing the enhanced search queries to the original text document or by evaluating a cluster characteristic from the cluster process. Specifically, the accuracy measure for an enhanced query may be allocated the same accuracy value as determined for the corresponding non-enhanced query. As another example, the terms of the enhanced search query may be compared to the term vectors of one or more of the clusters for the search query and an accuracy measure may be determined in response thereto (e.g. simply as a number of matching terms). Such an approach may provide useful accuracy measures for e.g. enhanced search queries determined from a topic classification approach.

In the example, step 215 is followed by step 217 wherein a subset of the enhanced set of search queries is determined in response to the search query accuracy measures for the enhanced search queries. The resulting subset is then presented to the user in step 219. For example, a fixed number of suggested search terms are presented to the user (e.g. the fixed number of search terms having the highest accuracy measure).

The user then selects one or more search queries (or manually generates a new search query based on the suggested search queries) which are fed to a user search processor 119 which is coupled to the user interface processor 117 and the network interface 101. The user search processor 119 executes step 221 wherein the selected search queries are sent to the remote search engine. When the results are received by the network interface 101, they are fed to the user search processor 119 which forwards them to the user interface processor 117. The user interface processor 117 then presents the search results to the user.

The disclosed method can accordingly create search queries that are not necessarily composed only of terms that are present in the original user consumed text document (or original search queries). The approach is particularly advantageous if the initial text document on which the original queries are generated does not provide enough semantic information. Thus, the approach can creates different extended queries that are not obviously linked with the user current context because it is also capturing the constantly dynamic environment of the search engines. This gives the user the possibility of obtaining access to the most popular information.

Furthermore, the approach provides a validation or accuracy determination where the value for a query represents the degree of consistency in the information returned by the query. Based on the validation mechanism, the current system is able to reduce the number of queries to those that are not only correctly semantically structured but also to those queries that return relevant information when supplied to an external search engine.

Thus, the system may allow an automated generation of complex search queries. For example, a user selecting a specific text item, such as an SMS text, may initiate an automated two step process for generating complex search queries. The initial search query generation and search may be invisible to the user who may simply be presented with the enhanced search query suggestions in step 219. Thus, an efficient and easy to use generation of suggested search queries related to a short text message may be achieved in many embodiments.

The proposed approach can automatically create and validate advanced search queries based on content the user is reading. Furthermore, the approach can address e.g. the following problems: due to the brevity of the text content consumed by the user a simple semantic analysis will only return a limited number of relevant terms for which it is difficult to accurately determine the relevance. Also, the brevity will prevent an accurate topic determination. These problems may be advantageously addressed by the described system.

A specific advantage of the disclosed system is that a user may e.g. automatically be presented with possible search queries which are closely related to a specific short text item yet may comprise terms which are not present in this text item.

It will be appreciated that the above description for clarity has described embodiments of the invention with reference to different functional units and processors. However, it will be apparent that any suitable distribution of functionality between different functional units or processors may be used without detracting from the invention. For example, functionality illustrated to be performed by separate processors or controllers may be performed by the same processor or controllers. Hence, references to specific functional units are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims does not imply any specific order in which the features must be worked and in particular the order of individual steps in a method claim does not imply that the steps must be performed in this order. Rather, the steps may be performed in any suitable order.

## Claims

1. A method of processing a search query for text content items, the apparatus comprising:
generating a first set of search queries;
submitting the first set of search queries to a search engine for text content items;
receiving text content item search results for the first set of search queries from the search engine;
clustering a plurality of the text content item search results in response to characterising data for the text content item search results, the clustering generating a plurality of clusters of text content items search results;
determining a first cluster characteristic for at least a first cluster of the plurality of clusters; and
generating a search query accuracy measure for the first set of search queries in response to the first cluster characteristic.

2. The method of claim 1 further comprising:
selecting a subset of search queries from the first set of search queries in response to the search query accuracy measure.

3. The method of claim 1 wherein the first cluster characteristic comprises a cluster size characteristic indicative of a number of text content item search results in the first cluster.

4. The method of claim 3 further comprising selecting the first cluster as a cluster of the plurality of clusters comprising most text content item search results.

5. The method of claim 1 wherein the generating step is arranged to generate the search query accuracy measure in response to a proportion of a group of text content item search results that are clustered in the first cluster.

6. The method of claim 5 further comprising selecting text content item search results for the group of text content item search results in response to a ranking of the text content item search results by the search engine.

7. The method of claim 1 wherein the determining step comprises determining an associated topic for each cluster of the plurality of clusters; and generating the first cluster characteristic as a topic distribution characteristic for the plurality of clusters.

8. The method of claim 1 further comprising:
determining a second cluster characteristic for at least one cluster of the plurality of clusters; and
determining a second set of search queries in response to the second cluster characteristic.

9. The method of claim 8 wherein the step of determining the second cluster characteristic comprises determining the second cluster characteristic as characterising data for the at least one cluster.

10. The method of claim 9 wherein the step of determining the second cluster characteristic comprises determining at least some of the characterising data by text analysis of text content of text content item search results belonging to the at least one cluster.

11. The method of claim 10 wherein the step of determining the second cluster characteristic comprises determining characterising data comprising a term vector for the at least one cluster; and the step of determining the second set of search queries comprises adding terms of the term vector to at least one search query of the first set of search queries.

12. The method of claim 11 wherein the term vector is a centroid term vector for the at least one cluster.

13. The method of claim 8 wherein the step of determining the second cluster characteristic comprises determining the second cluster characteristic as an associated topic for the at least one cluster.

14. The method of claim 13 further comprising providing a set of terms associated with the associated topic; and wherein the step of determining the second set of search queries comprises adding terms of the set of terms to at least one search query of the first set of search queries.

15. The method of claim 8 wherein the step of determining the at least one cluster comprises determining a similarity measure for at least one search query of the first set of search queries and each cluster of the plurality of clusters for the at least one search query; and selecting the at least one cluster in response to the similarity measures.

16. The method of claim 8 further comprising:
generating a second search query accuracy measure for the second set of search queries in response to the first cluster characteristic.

17. The method of claim 16 further comprising:
selecting a subset of search queries from the second search set of search queries in response to the second search query accuracy measure.

18. The method of claim 1 further comprising generating at least one query of the first set of search queries in response to characterising data for a text content item consumed by a user.

19. The method of claim 18 wherein the step of generating at least one query comprises extracting a set of terms from the text content item by text analysis.

20. The method of claim 18 wherein the text content item comprises less than one hundred words.

21. An apparatus for processing a search query for text content items, the apparatus comprising:
a unit for generating a first set of search queries;
a unit for submitting the first set of search queries to a search engine for text content items;
a unit for receiving text content item search results for the first set of search queries from the search engine ;
a unit for clustering a plurality of the text content item search results in response to characterising data for the text content item search results, the clustering generating a plurality of clusters of text content items search results; and
a unit for determining a first cluster characteristic for at least a first cluster of the plurality of clusters; and
a unit for generating a search query accuracy measure for the first set of search queries in response to the first cluster characteristic.
